# EUROPEAN PATENT APPLICATION

(11) **EP 1 810 582 A1**
(43) Date of publication of application: **25.07.2007**
(21) Application number: 05762029.6
(22) Date of filing: 22.07.2005
(51) Int. Cl.: A41G 3/00, C09J 175/04

(54) **WIG ADHESIVE, WIG UTILIZING THE SAME AND PROCESS FOR PRODUCING THEM**

(30) Priority: 25.10.2004 JP 2004301050
(71) Applicant: ADERANS CO., LTD., Shinjuku-ku, Tokyo 160-8429 (JP)
(72) Inventor: Sugai, Katsuo c/o Aderans Co., Ltd., Tokyo; 1608429 (JP); Sato, Takashi c/o Aderans Co., Ltd., Tokyo; 1608429 (JP); Sugawara, Fumitaka c/o Aderans Co., Ltd., Tokyo; 1608429 (JP); Ogawa, Yoshie c/o Aderans Co., Ltd., Tokyo; 1608429 (JP)
(74) Representative: Marshall, John Grahame
(86) International application number: PCT/JP2005/013465
(87) International publication number: WO 2006/046336

(57) **Abstract**

An adhesive for a wig, a wig using the same, and methods of manufacturing the both are such that the adhesive for a wig has a single layer, is bondable unpeelably to the inner side of a wig base, and is bondable by pressure re-peelably to scalp, wherein the adhesive layer (4) is provided to fix needle foot portions of hair (3) penetrated to the inner side of the wig base (2). One side of the adhesive layer (4) is bondable by chemical reaction to the inner side of the wig base (2) during gelation reaction of the adhesive solution applied to the inner side of the wig base (2), while the other side is bondable by pressure re-peelably to scalp. One side of the adhesive layer (4) has the hair fixing function to fix the needle foot portion of hair (3A) planted penetrating the inner side of the wig base (2). Since the wig (1) is made as double layer structure with a single adhesive layer (4), it is light-weighted, and since the adhesive layer (4) has re-peelability, it can be used repeatedly, resulting in low cost.

## Description

### Technical Field

This invention relates to an adhesive for a wig to firmly fix the wig to a head, said wig covering the head part of thin hair or of bald state, a wig using the same, and to methods of manufacturing said adhesive and said wig.

### Background Art

A wig comprises in general a wig base and hair made of natural or artificial hair implanted to said wig base, and, as said wig base, such are known as mainly made of artificial skin of mainly soft plastics, for example, urethane resin, and mainly made of a net which excels in ventilation.

In case of planting hair to the wig base of artificial skin, so-called V-shaped hair implanting (V implanting) is conveniently used by which hairs are only inserted to the wig base so that the hair appears as if growing from scalp. The V-shaped hair planting is such that two-folded hair is inserted from the outer side to the inner side of a wig base by using a hair planting tool such as a hook needle, a needle foot portion of about 1mm is made, and the hair is attached to the wig base in V-shape by pulling out one end of the two-folded hair again to the outer side. However, since only the planting in V-shape causes the hair easily pulled off from the wig base with a finger or brushing, the process to fix the hair attached to the wig base is indispensable. For said hair fixing, an adhesive solution diluted with organic solvent is usually applied after planting over the whole inner side of the wig base of artificial skin, and said solution is adhered and fixed on the artificial skin, thereby the needle foot portion of hair is sandwiched between the artificial skin and the adhesive coat to be fixed and held. (Refer to, for example, Patent References 1 and 2.)

For wearing the wig on a head thus made to have an adhesive layer for fixing hair to the inner side of the base of artificial skin, it is worn by utilizing natural hair around thin hair or a bald part, attaching a specific stopper to the inner side of the base of artificial skin and pinching the natural hair of the head with said stopper, knitting the natural hair into the hair of the wig, or binding the natural hair to a string member provided on the periphery of the base. Or a wig is worn by directly bonding the base of artificial skin to a scalp with an adhesive or a tackifier. In the latter case, that is, in the case of bonding a wig to scalp with an adhesive or a tackifier, an instant adhesive or a tackifier prepared upon every time a wearer uses a wig, said adhesive is applied, or said tackifying tape is bonded at pre-designed positions on the periphery of the inner side of the base of artificial skin, thereby it is adhered to the scalp. When the wig is taken off, since a tackifying tape is merely pressed and bonded, it can be detached from the scalp comparatively easily, but an instant adhesive must be detached slowly and carefully with a release agent applied between the wig and scalp. Thus, since bonding and releasing works of an adhesive or a tackifier (tackifying tape) are required upon every time the wearer puts on or takes off the wig, it was quite a cumbersome work.

In this connection, Patent Reference 3 (Japanese Patent laid open Application, 2001-89921 A) discloses a wig having an adhesive layer provided in advance over the whole inner side of a wig base to be bonded to scalp. Said wig comprises a wig base, and two adhesive layers on the inner side of said wig base. Said two adhesive layers comprise a first adhesive layer to fix hair to the base by applying an adhesive to the inner side of the wig base for fixing the hair attached to the wig base, and a second adhesive layer applied over the whole inner side of the base on the outside of the first adhesive layer for bonding the wig to scalp. Specifically, as described in Patent Reference 3, Specification, column [0010], the first adhesive layer is an adhesive layer for pinching and fixing the root portion of hair implanted in the wig base and protruding from the inner side of the base (hereinafter, the root portion protruding from the inner side is called a needle foot portion of hair) between the wig base and the adhesive, and, like the art described in Patent References 1 and 2, hair is fixed by blowing and solidifying a quick-drying adhesive to the inner side of the wig base. The second adhesive layer is such that, for bonding the wig base directly to scalp, a tackifying agent is blown over the whole inner side of the wig base over the first adhesive layer after the first layer is solidified, and a separator is bonded on said tackifying layer, and when a user wears a wig, the separator is peeled off, and the whole surface of the second adhesive layer is bonded to scalp. That is, said adhesive layer of double layer structure is that in which the quick-drying first adhesive layer is laminated and solidified on the inner side of the wig base for fixing hair, and, in addition, the second adhesive layer made of a tackifying agent different from said quick-drying adhesive is sequentially laminated in advance on the solidified first adhesive layer for bonding the wig base to scalp.

From the art disclosed in Patent Reference 3 and others, the conventional wigs of scalp bonding system is in general such that, for fixing a needle foot portion of hair appearing on the inner side of an artificial skin base, a quick-drying adhesive is applied to the inner side of the base and solidified, followed next by a tackifier which would not solidify for long time applied thereon, or a tackifying tape bonded, thereby to be bonded on to scalp, and, by thus sequentially laminating the first and the second adhesive layers mutually different in kind, fixing of hair to a wig base and bonding the wig base to scalp are made possible.
Thus, since the first adhesive layer is of a quick-drying adhesive in conventional systems, if a user tries to bond said adhesive to scalp, it is already solidified, and shows no adhesiveness. This is because, though the adhesive of the first adhesive layer shows adhesiveness by the chemical reaction with the wig base made of plastics, it has no tackiness to scalp due to solidifying. Also on the other hand, the second adhesive layer alone can bond a wig to scalp by tackiness, but can not fix hair to the wig base. Because, since a tackifier utilizes only physical tackiness by compression, and not the adhesion by chemical reaction, such adhesion is not brought about that hair is fixed and not pulled out. The conventional tackifiers do not have adhesion required to fix hair to a wig base, and no single layer tackifier has so far been known for applying to the adhesion faces completely different in physical properties such as a wig base made of hard resin and human skin. Consequently, said double adhesive layers needed to use two kinds of adhesive and tackifier with different fields of use, and to sequentially laminate these to form double adhesive layers. Thus, such single adhesive or tackifier has not so far been known that has both functions of fixing of hair to a wig base, and bonding of the wig base to scalp.

In this connection, though bonding of a wig to scalp can be made firm by using not a tackifier but an adhesive, the adhesion deteriorates in short period in the environment where scalp fat and sweat exist, or tensile force by brushing occurs. Although applying a new adhesive can be repeated for reuse upon deteriorated adhesion, it causes hardening of the wig and increasing its thickness by repetition of adhesive application, and the natural appearance upon wearing is damaged.

Further, there may be such a case that a wig of artificial skin causes the light passed through the gaps of planted hair to reflect on the wig base, and unnatural gloss to appear. If the surface of a wig has gloss, the reflected light may be easily spotted by people nearby, and hence degloss processing is necessary. As said degloss processing, a method to physically make a surface coarse by sand blast or others, a method to make minute concavity and convexity on a surface such as emboss processing, and a method to mix in alien matters like inorganics are known. Sand blast and emboss processing are suitable to process sheet-like or film-like articles using a machine, but not suitable to process a wig base having a curved shape on a head portion. Although a method to mix in alien matters like inorganics is simple, and suitable for the wig making, deglossing to control to make natural gloss is difficult, and has a fault to make the wig base hardened.
Further, as a degloss processing of a wig base having a curved shape on a head portion, Patent references 4 and 5 disclosed methods to make coarse surface by corroding at random the surface of a wig base member to make minute convexity and concavity.
Patent Reference 1: Japanese Patent laid open Application S52-123755 A (1977)
Patent Reference 2: Japanese Patent 3484565
Patent Reference 3: Japanese Patent laid open Application 2001-89921 A
Patent Reference 4: Japanese Patent laid open Application H02-216207 A (1990)
Patent Reference 5: Japanese Patent laid open Application H03-69601 A (1991)

### Disclosure of the Invention

### Problems to be Solved

As mentioned above, the conventional scalp bonding wig is so constituted that, for fixing a needle foot portion of hair planted in a wig base, a quick-drying adhesive such as disclosed in Patent References 1 and 2 is blown to the inner side of the wig base, and adhered and solidified, followed by a tackifier disclosed in Patent Reference 3 blown to the inner side of the wig base to form the second adhesive layer for bonding to scalp. However, there has so far been no single adhesive or tackifier for a wig having a firmly adhering function to hair and a bonding function to scalp combined. Also, the wig disclosed in Patent Reference 3 has a problem that it has no detaching function from scalp, so is dispensable and not for reuse. Thus, the conventional wig does not have a single adhesive layer for a firmly adhering function of hair to a wig base, and a bonding function to scalp combined.

There is also a problem that, in degloss processings to suppress the surface gloss of a wig base, the known methods to physically make a surface coarse and to mix in alien matters like inorganics have difficulty. The method to mix in alien matters like inorganics has also a problem that a wig base is made hardened, so it can not follow the movement of skin when bonded to scalp, and consequently adhesion strength to scalp is lowered, and easily detached.

Referring to the above-mentioned problems, the first object of the present invention is to offer an adhesive for a wig comprising a single layer, bondable unpeelably to the inner side of the wig base by chemical reaction, and bondable by pressure re-peelably to scalp.
The second object of the present invention is to offer a wig provided with a single adhesive layer capable of assuredly achieving to fix hair to the wig base, and to bond the wig to scalp.
The third object of the present invention is to offer a method of manufacturing easily said adhesive for a wig.

### Means to Solve Problems

In order to achieve said first object, an adhesive for a wig of the present invention is characterized to have a single layer, bondable unpeelably to the inner side of the wig base, and bondable by pressure re-peelably to scalp.
An adhesive for a wig of the present invention is also characterized in that, it is provided with an adhesive layer bondable unpeelably to the inner side of the wig base, one side of the adhesive layer is bonded by chemical reaction to the inner side of the wig base during gelation reaction of the adhesive solution applied to the inner side of the wig base, and has the hair fixing function to fix the needle foot portion of hair planted penetrating the inner side of the wig base, while the other side of the adhesive layer is bonded by pressure to scalp without chemical reaction, and has the re-peelable function from scalp. Here, the re-peelable function from scalp is realized after gelation reaction of the adhesive layer is completed.
In the structure described above, the adhesive layer comprises urethane gel, preferably a urethane resin pressure sensitive adhesive of the two liquids mixture type made of a main agent and a hardening agent, wherein the main agent is polyol with a urethane resin as the main component, and the hardening agent has polyisocyanate as the main component.
By said structure, an adhesive for a wig can be offered which comprises a single adhesive layer having both fixing function of hair to fix needle foot portions of hair planted to a wig base and re-peelable function from scalp.

In order to achieve the second object, a wig of the present invention is characterized in that, it comprises a wig base, hair implanted to said wig base, and an adhesive layer provided to the inner side of the wig base, and said adhesive layer has one side being bonded by chemical reaction to the inner side of the wig base during gelation reaction of the adhesive solution applied to the inner side of the wig base, and the other side being bonded re-peelably by pressure to scalp without chemical reaction.
In the structure described above, one side of the adhesive layer is preferably bonded by chemical reaction to the inner side of the wig base during gelation reaction of the adhesive solution applied to the inner side of the wig base, and has the hair fixing function by said adhesive layer to fix the needle foot portion of hair planted penetrating the inner side of the wig base, while the other side of the adhesive layer is bonded by pressure to scalp, and since this bonding is not by chemical reaction, it has the re-peelable function from scalp.
By said structure, since the wig comprises only a wig base and a single adhesive layer, and said single adhesive layer has the hair fixing function to fix the needle foot portion of hair, and the re-peelable function from scalp, its structure is simple. Therefore, the wig can be made thin and light. And since the side of the adhesive layer to be bonded to scalp has re-peelability, the wig can be reused repeatedly, and hence can be offered at low cost.

In said structure, surface of the wig base is preferably degloss processed. Said degloss processing is conducted by mixing a deglossing agent to the wig base, and further forming minute concave and convex portions on the wig base surface. The deglossing agent is preferably inorganic particles, and the minute concave and convex portions are formed by transcription from a fine mesh. When the wig base is degloss processed by deglossing agent addition and minute concave and convex portions, light is reflected diffusely resulting in a wig which is not easily found out when worn.

According to the present invention, the wig base is preferably made of artificial skin of urethane resin, and the adhesive layer of the wig is of urethane gel. Said urethane gel comprises a urethane resin pressure sensitive adhesive of the two liquids mixture type made of a main agent and a hardening agent, wherein the main agent is polyol with a urethane resin as the main component, and the hardening agent has polyisocyanate as the main component. When a single adhesive layer of urethane gel is formed to the wig base of urethane resin, the adhesive layer of urethane gel shows an excellent reaction, while the wig is worn, to follow the movement of scalp, the sufficient wig fixing ability is realized without lowering of adhesion strength with scalp.

In order to achieve said third object, a method of manufacturing an adhesive layer provided on the inner side of the wig base of the present invention is characterized in that, a solution containing a main agent, a hardening agent, and organic solvent is mixed and stirred, left at ordinary temperature for a predetermined time for reaction to proceed, said solution is applied to the inner side of the wig base, heated at the pre-set temperature higher than ordinary temperature, bonded to the inner side of the wig base, and cooled to ordinary temperature after heating for the predetermined time to form an adhesive layer, thereby hair fixing function is given to the wig base side of the adhesive layer to fix needle foot portions of hair planted penetrating the inner side of the wig base, as well as re-peeling function from scalp is given to the side of the adhesive layer to be bonded to scalp.
In the structure described above, the adhesive layer is made of urethane gel, and preferably comprises a urethane resin of the two liquids mixture type made of a main agent and a hardening agent, wherein the main agent is polyol with a urethane resin as the main component, and the hardening agent has polyisocyanate as the main component.
According to the above-described method of manufacturing, an adhesive layer for a wig can be easily manufactured which comprises a single layer having hair fixing function to fix needle foot portions of hair planted on a wig base, and re-peeling function from scalp.

A method of manufacturing a wig of the present invention includes a process of forming a wig base of soft plastics, a process of planting hair to said wig base, and a process of forming an adhesive layer on the inner side of the wig base, and the adhesive layer is characterized in that, a solution containing a main agent, a hardening agent, and organic solvent is mixed and stirred, left at ordinary temperature for a predetermined time for reaction to proceed, said solution is applied to the inner side of the wig base, heated at the pre-set temperature higher than ordinary temperature, bonded to the inner side of the wig base, and cooled to ordinary temperature after heating for the predetermined time to form an adhesive layer, thereby hair fixing function is given to the wig base side of the adhesive layer to fix needle foot portions of hair planted penetrating the inner side of the wig base, as well as re-peeling function from scalp is given to the side of the adhesive layer to be bonded to scalp.
In the above-described structure, hair is preferably implanted in V- or U-shape by penetrating from the surface to the inner side of the wig base to form needle foot portions of hair, and pulling out again to the surface, the solution to form the adhesive layer is applied to the inner side of the wig base, heated at the pre-set temperature higher than ordinary temperature, and bonded to the inner side of the wig base, thereby the needle foot portions of hair is fixed to the inner side of the wig base.
According to the method of manufacturing described above, a wig can be manufactured which has hair fixing function to fix needle foot portions of hair and re-peeling function from scalp by a single adhesive layer. Since the adhesive layer is a single layer having hair fixing function and re-peeling function from scalp, the wig can be made thin and light, compared with the prior two adhesive layers formed separately. And since the side of the adhesive layer to be bonded to scalp has re-peelability, the wig can be reused repeatedly, and hence can be manufactured at low cost.

Making of a wig base preferably includes a degloss processing to the wig base, and said degloss processing comprises a process to add a deglossing agent to the wig base, and a process to form minute concave and convex portions on the surface. The process to add a deglossing agent to the wig base is conducted during a wig base making process by applying and drying the solution with inorganic particles added into the solution to become the wig base. Also, the process to form minute concave and convex portions on the wig base is such that the wig base is covered with a fine mesh net after the process to add a deglossing agent to the wig base, and concave and convex portions are formed by transcription of fine mesh. By degloss processing of the wig base, the wig can be manufactured which is not easily found out when worn by diffuse reflection of light. Since said degloss processing is made with a deglossing agent added to the wig base and minute concave and convex portions, natural gloss can be attained.

The soft plastics which makes up the wig base is preferably a urethane resin, and the adhesive layer is made of urethane gel. Said adhesive layer is formed with a urethane resin of the two liquids mixture type made of a main agent and a hardening agent, wherein the main agent is polyol with a urethane resin as the main component, and the hardening agent is polyisocyanate as the main component. Making the adhesive layer from urethane gel results in good re-peelability of the adhesive layer. Also, since both the wig base and the adhesive layer are made of urethane, the wig base has flexibility, and follows well the movement of scalp.

### Effect of the Invention

According to an adhesive for a wig and a method of manufacturing an adhesive layer for a wig using the same of the present invention, a single layer can have both fixing function of needle foot portions of hair and re-peeling function from scalp.
According to the wig and the method of manufacturing the same of the present invention, a wig can be offered which is made of a double layer structure with a wig base and a single adhesive layer formed from an adhesive for a wig. Since a single adhesive layer has fixing function of hair and re-peeling function from scalp, its structure is simple. Therefore, the wig can be made thin and light.
Also, the side of the adhesive layer to be bonded to scalp has re-peelability, and the tackiness can be recovered only by washing with water of the adhesive layer part for the repeated reuse. Therefore, a wig of low cost can be realized.
Further, in case that the wig base surface is degloss processed, a wig can be offered which is not easily found out when worn.

### Brief Description of the Drawings

Fig. 1 is a cross-sectional view schematically illustrating a structure of a wig in accordance with the first embodiment of the present invention.
Fig. 2 is a cross-sectional view schematically illustrating a structure of a wig having a deglossed wig base in accordance with the second embodiment of the present invention.
Fig. 3 is a plan view of Fig. 2.
Fig. 4 is an image of a scanning electron microscope (SEM) of minute concave and convex portions formed on the wig surface in Example.
Fig. 5 is (A) an image of a scanning electron microscope, and (B) an illustration for its explanation of the surface and the cross-section of the wig in Example.
Fig. 6 is (A) an image of a scanning electron microscope, and (B) an illustration for its explanation of the surface and the cross-section of the wig in Example.

### Explanation of Marks and Symbols

- 1:: Wig
- 2:: Wig Base
- 3:: Hair
- 3A:: Needle Foot Portion of Hair
- 4:: Adhesive Layer
- 5:: Sheet for Peeling
- 6:: Deglossing Agent (Inorganic Particles)
- 10:: Wig Having Deglossed Wig Base
- 12:: Deglossed Wig Base
- 12A:: Region Where Deglossing Agent is Added
- 12B:: Concave Portion
- 12C:: Convex Portion
- 12D:: Minute Concave and Convex Portion

### Best Modes for Carrying out the Invention

The present invention will better be understood from the following detailed description and the drawings attached hereto showing certain illustrative forms of embodiment of the present invention. In this connection, it should be noted that such forms of embodiment illustrated in the accompanying drawings hereof are intended in no way to limit the present invention but to facilitate an explanation and an understanding thereof.
Explanation is first made of a wig using an adhesive layer for a wig in accordance with the present invention.

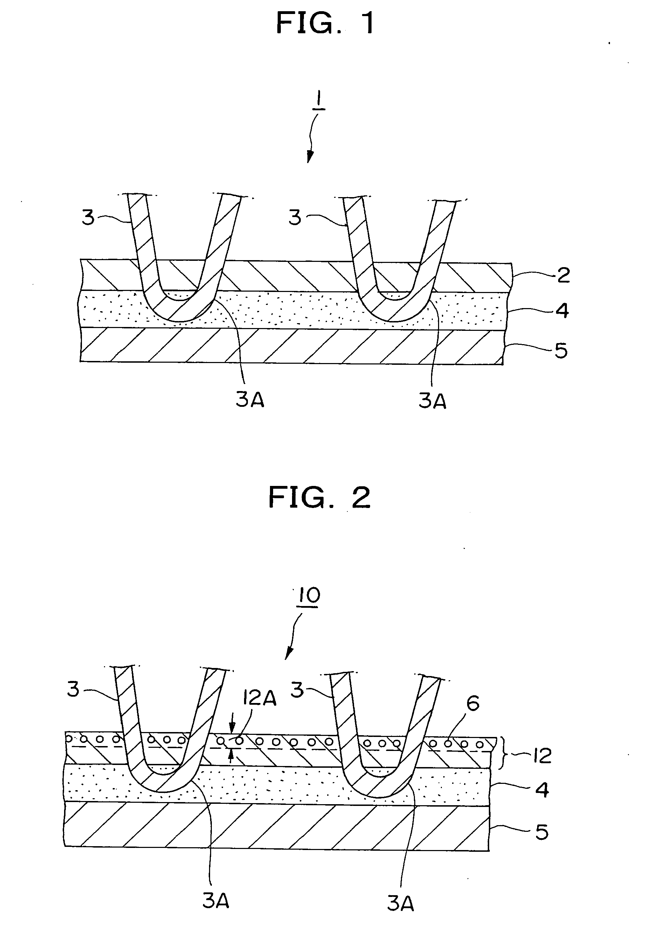

Fig. 1 is a cross-sectional view schematically illustrating a structure of the wig in accordance with the first embodiment of the present invention. As shown in Fig. 1, a wig 1 comprises a wig base 2, a hair 3 implanted to the wig base 2, and a single adhesive layer 4 for the wig (hereinafter to be called properly an adhesive layer). The hair 3 is made either of human hair or of artificial hair. As is illustrated, the hair 3 can be implanted in V- or U-shape by planting through the surface side of the wig base 2 to the inner side, and pulling out again to the surface side of the wig base 2. This hair portion penetrated and exposed on the inner side of said wig base 2 is to be called a needle foot portion 3A. Here, such implanting method is called in general V-implanting. The wig base 2 can be made with ultra thin artificial skin using soft plastics such as, for example, urethane resin.

In the wig of the present invention, the single adhesive layer 4 for a wig has such a novel structure that has the specific property by which one side is adhered unpeelably to the inner side of the wig base 2, while the other side can be adhered by pressure re-peelably to scalp. The above-mentioned side of the adhesive layer 4 is adhered unpeelably to the inner side of the wig base 2, it has hair fixing function to fix the hair needle foot portion 3A exposed on the inner side of the wig base by sandwiching with said inner side of the wig base and one side of the adhesive layer. Also, since the other side of the adhesive layer 4 can be adhered by pressure re-peelably to scalp, repeated use of the wig is possible. Thus, the wig 1 of the present invention has a double layer structure of the wig base 2 and the single adhesive layer 4 for the wig base, and said single adhesive layer 4 is adhered unpeelably to the inner side of the wig base 2, thereby it has a fixing function of the hair needle foot portion 3A, as well as a re-peeling function from scalp.

The adhesive layer 4 for a wig of the present invention can be made to have transparency or transmissiveness with an adhesive for a wig having the component and property described below, and is highly adhesive to the wig base 2 and the hair needle foot portion 3A, and re-peelable from scalp. In this connection, following the formation of the adhesive layer 4 on the wig base 2, it is preferable for handling to provide a release sheet 5, on said adhesive layer, made of vinyl chloride sheet or the like easily peelable by the wearer's hand.

In general, the terms adhesive or adhesive layer are used, in addition to the adhesion accompanied by chemical reaction, as the concept including bonding merely by pressure without chemical reaction, and in the present invention, an adhesive layer 4 for a wig or an adhesive is used as the broader concept including both. Said adhesive layer 4 is such that one side to be adhered to the wig base 2 is adhered by chemical reaction to the inner side of the wig base 2 during gelation reaction of the adhesive solution applied to the inner side of the wig base. The needle foot portion of hair 3A is sandwiched between the base and the adhesive layer when the adhesive layer 4 is adhered to the wig base 2, and it, too, is fixed to the adhesive layer 4 at the same time.
On the other hand, the other side of the adhesive layer 4 can be adhered by pressure re-peelably to scalp. Said re-peelable function of the adhesive layer 4 from scalp is realized after said gelation reaction of the adhesive is completed. Therefore, the adhesive layer 4 after gelation reaction can be adhered to scalp by applying slight force at ordinary temperature for short time, that is, it has the property of pressure sensitive adhesive layer (so-called tackifying layer) capable of adhesion by pressure. Further, the adhesive layer 4 after gelation reaction is bondable repeatedly to scalp by wiping off its surface with a trace amount of water or organic solvent. It is called in the present invention re-peelable function, or merely peelable function that this repeated bonding is possible.

Explanation is further made of the adhesive layer 4 for a wig of the present invention.
As the adhesive for a wig used for the formation of the adhesive layer 4, urethane and acrylic resins, and rubber are mentioned by rough classification. The adhesive for a wig of urethane resin is good in adhesivity, as described below, to fix needle foot portions of hair 3A to the wig base 2, and has the property to firmly adhere unpeelably between the adhesive layer 4 and the wig base 2. Also, its re-peelability in case of bonding to a head is excellent, and it has low skin irritation. Therefore, it can be preferably used as the adhesive for a wig to form the adhesive layer 4 of the present invention.

On the other hand, an adhesive of acrylic resin excels in tackiness, but has weak re-peelability and strong skin irritation in some cases. Rubber excels in initial tackiness, but has a problem that the re-peelability deteriorates remarkably as time elapses. Also, if said adhesive layer for a wig is formed with the adhesive of acrylic resin or rubber resin, it is not preferable as it can not follow the movement of skin when bonded to scalp due to the hardness of the resin itself, tends to peel off by lowering of adhesion strength to scalp, its adhesiveness is weak to fix needle foot portions of hair to the wig base, the adhesiveness is weak between the adhesive layer and the wig base, and peeling off tends to happen easily.

Further explanation is next made in detail of the case to form the adhesive layer 4 using an adhesive for a wig of urethane resin.
As an adhesive for a wig of urethane resin, a two liquids mixture type adhesive comprising a main agent and a hardening agent is preferable. The main agent may be polyol with urethane resin as a main component, and the hardening agent may be polyisocyanate as a main component. Such is preferable that these two liquids are mixed to react for gelation, and change into a gel after gelation reaction is completed. Said gelation can be accelerated by heating. By the function of isocyanate contained in the hardening agent during gelation, not only physical bonding by such as surface tension but also chemical bonding is applied. Therefore, the adhesion between the wig base 2 and the adhesive layer 4, and the fixation between the wig base 2 and the needle foot portions of hair implanted thereon are remarkably improved, and the fixation of the same level as the hair fixing process with a conventional adhesive. Here, the fixation is defined as the adhesion of the wig base 2 to the needle foot portions of hair planted thereon of the adhesive layer 4 of the present invention, and is used to distinguish from the adhesion by ordinary heat sensitive adhesives. Since the adhesive for a wig of a two liquids mixture type urethane resin becomes the adhesive layer 4 of a gel structure after reaction, that is, a tackifying layer, it shows an excellent reaction to follow the movement of scalp when the wig 1 is worn, and the adhesion strength to scalp is not deteriorated, thereby sufficient wig tackiness is realized.

Further, explanation is made of the method to give fixation of the needle foot portions of planted hair 3A to the wig base 2. It can be realized by mixing the adhesives comprising monomers of the two liquids mixture type urethane resin, applying the adhesive to the wig base 2 with a small amount of organic solvent of the material of the deglossed wig base added into said two liquids, and drying. As such organic solvents, dimethylformamide (DMF) and methylethylketone (MEK) can be used, if the material of the wig base 2 is a urethane elastomer. Adjustment of fixation of the adhesive layer 4 to the needle foot portions of hair 3A and tackiness to a head can be realized by adjustment of the mixing ratio of the main and the hardening agents of the adhesive for a wig of the two liquids mixture type urethane resin, adjustment of applying viscosity, and adjustment of settling time after the two liquids mixing till applying to the wig base 1 with the hair 3 implanted thereon.

According to the present invention, the adhesive layer 4 may be partially provided only in the region where hair 3 is implanted, not totally provided on the whole wig base 2. In case that the region where hair 3 is implanted is not made in the peripheral portion of the wig base 2, the bonding to scalp is easy by providing the adhesive layer 4, the border line of the wig base 2 and the scalp is not easily found out, thereby the natural appearance is improved when the wig is worn.
Thus, the present invention is characterized in that a single adhesive layer 4 is used. Therefore, the first adhesive having fixing function of needle foot portions and the second adhesive having bonding function to scalp, provided separately in prior arts, can be replaced with a single adhesive layer 4 in the present invention. Thereby, in the present invention, a simple structure can be realized with the wig base 2 and the single adhesive layer 4. The thickness of the single adhesive layer 4 may be just that enough for fixing the needle foot portions of hair 3A, for example, as thin as about 0.05 mm which is the diameter of implanted hair, and hence the wig 1 can be made light. Also, the adhesive layer 4 of the side to be bonded to scalp has re-peelability, and the tackiness can be recovered only by washing with water of adhesive layer 4 portion for repeated use. Consequently, the wig 1 of low cost can be realized, and a wig wearer is saved from financial burden.

Next, explanation is made of a wig having a deglossed wig base which is the further improved version of the first embodiment of the present invention.
The wig 1 in accordance with the first embodiment mentioned above is preferable, for example, to increase the hair in a forehead part by bonding it on the front part that is retreated from the original hairline, but the wig base bonded on said front part is quite visible and apparent. Especially, the wig base 2 of the present invention has a smooth and glossy surface because it is made of artificial skin. Therefore, since the reflected light from the surface of said artificial skin is visible through the implanted hair 3, it is quite important to devise to avoid visibility of the bonded artificial skin.

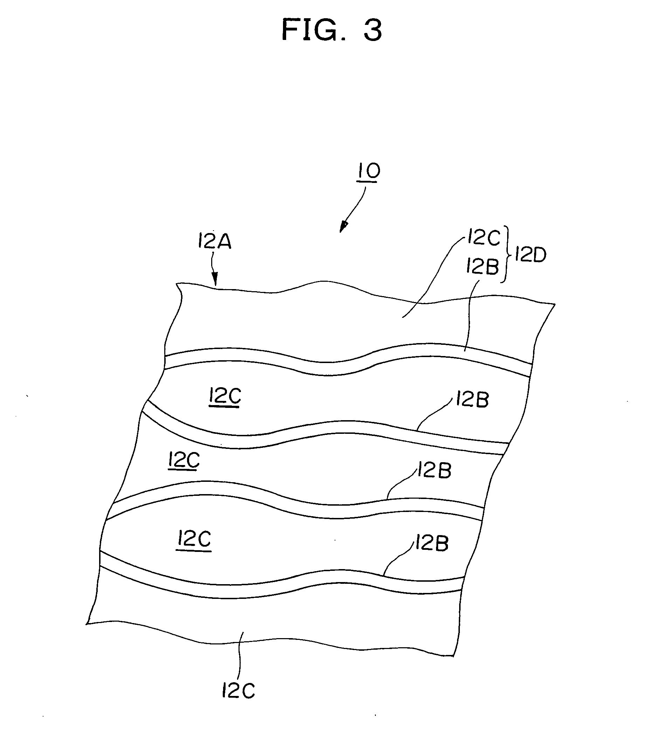

In accordance with the second embodiment of the present invention, a wig base made of artificial skin is offered which has the gloss suppressed to the same level as scalp, as well as the surface shape and state imitative of scalp pattern composed with minute concavity and convexity. Fig. 2 is a cross-sectional view schematically illustrating a structure of a wig 10 having a deglossed wig base 12 in accordance with the second embodiment of the present invention, and Fig. 3 is a plan view illustrating the surface side of the wig base 12 of Fig. 2. As shown in Figs. 2 and 3, the difference of the wig 10 from the wig 1 of the first embodiment is that a minute concave and convex portion 12D is formed for deglossing on the surface of the wig base 12, and a deglossing agent 6 is added in the wig base. Said minute concave and convex portion 12D comprises a concave portion 12B and a convex portion 12C, and has a pattern imitative of the skin pattern of a head. Therefore, even if the artificial skin is exposed through the implanted hair, the appearance as if the wearer's scalp can be attained, and the light is reflected diffusely by minute concavity and convexity, thereby unnatural gloss can be reduced. Also, in the present embodiment, a deglossing agent 6 is added in the artificial skin from its surface to a certain depth. Thereby, unnatural gloss is further suppressed resulting in the gloss suppressed to the same level as scalp. The deglossing agent 6 is, in case of the illustration, added from the surface side of artificial skin to the depth of a certain region 12A, but, by adjusting the added amount of said deglossing agent 6, the glossiness of artificial skin, as well as the hardness and the transparency can be adjusted variously. Other structure is same as the wig 1.

In case to make the wig base thin to make it light, it is preferred, deglossing effect and the following ability to the skin movement when bonded to scalp taken into consideration, to add the deglossing agent 6 only shallowly in the surface side of the wig base 12. As an example, in case to design the thickness of the wig base 12 to 0.05 - 0.1 mm, the deglossing agent 6 is added preferably to the depth of about 0.01 - 0.015 mm from the surface side of the wig base. If shallower than 0.01 mm, deglossing effect is not sufficient, and if thicker than 0.015 mm, then the wig base 1 is hardened by the deglossing agent 6, and can not follow the scalp movement sufficiently, and these regions are not preferred. Also, it is not preferred to add too much amount of the deglossing agent 6, for it results in white turbidity and lowering of transparency.
As the deglossing agent 6, various inorganic particles may be used. As the material for said inorganic particles 6, either of silica, titanium oxide, aluminum oxide, aluminum hydroxide, magnesium carbonate, calcium carbonate, zeolite, and glass may be used. Especially, the powdery silica with the particle diameter 1 - 10 µm is preferred. The amount of powdery silica to be added is preferably designed to about 5-25 % to the thermoplastic elastomer weight dissolved in organic solvent. By adding powdery silica as the deglossing agent 6 only in the surface side of the wig base, since the wearer's scalp color is see-through, the border line of the deglossed wig base 2 and the scalp is not easily found out, thereby the natural appearance is improved when the wig is worn.

On the deglossed wig base 12, a minute concave and convex portion 12D is formed by transcription using a fine mesh of net-like textile or the like as described below. Said minute concave and convex portion 12D has a pattern imitative of skin like the wrinkle pattern of scalp.

By the wig 10 having the deglossed wig base 12 of the present invention, the combined deglossing effect is realized by the deglossing agent 6 and the diffuse reflection by the minute concave and convex portion 12D. Since powdery silica is transparent, and the wearer's scalp color is see-through, the border line between the wig base and the scalp is not easily found out, thereby a natural appearance is improved when the wig is worn.
Further, the deglossed wig base is hardened by the addition of inorganics, and the color and transparency of the deglossed wig base are widely varied by the action of added inorganics, and hence it is bothersome to adjust the appearance close to the wearer's scalp color, but the structure of the present invention solves such defects.
According to the present invention, the wig 10 can be realized which has the fixing function of the needle foot portions of hair implanted to the wig base and the re-peeling function from the wearer's scalp, and which has the same gloss and wrinkle pattern as scalp, by using the wig base 12 with extremely high deglossing effect.

Explanation is next made of a method of manufacturing an adhesive layer 4 for a wig and the wigs 1 and 10 provided with the same in accordance with the present invention.
First, a method of manufacturing a wig base 2 is explained.
As the first step of the process, a thin sheet or film-type artificial skin resembling human's scalp is obtained as a wig base 2 on which hair is to be implanted by applying the solution (hereinafter, to be properly called thermoplastic elastomer solution) in which pelletized thermoplastic elastomer of soft plastics is dissolved in organic solvent to a male mold (for example, gypsum mold or others) imitative of the wig wearer's head shape prepared in advance, by casting and by drying. Various thermoplastic elastomers are applicable, but among them, for example, urethane elastomer is preferable, and fungicide or others may be added whenever necessary. The wig size may be determined depending on the baldness of the wearer's head, and a so-called partial wig or a wig covering the whole head may do. Said artificial skin may be formed as sheet, if used on the flat portion of the wearer's head.

Explanation is next made of a method of manufacturing a wig base 12 which is degloss processed wig base 2 in accordance with the second embodiment.
The first step is same as above. As the second step, the wig base 2 made in the first step is degloss processed in the following steps, thereby natural deglossing is applied on the wig base surface.
Concretely as the second step, the solution in which inorganic particles as the deglossing agent 6 are added into the thermoplastic elastomer solution used for manufacturing said wig base is applied to the surface of the wig base made in said first step, and dried. Here, in case to design the wig base thickness to about 0.05 - 0.1 mm, the depth of the region 12A containing the deglossing agent 6 after said solution is applied and dried is preferably designed as about 0.01 - 0.015 mm. For this purpose, the viscosity may be adjusted of the thermoplastic elastomer in the solution to be applied. Various inorganic particles may be applied, but powdery silica with the diameter of 1 - 10 µ m is preferred, and its amount to be added is preferably designed to about 5 - 25 % to the thermoplastic elastomer weight dissolved in the solution to be applied. Whenever necessary, an ultraviolet absorber or an oxidizer to prevent yellow coloring may be added in addition to the deglossing agent 6.

As the third step, a fine mesh net is covered on the wig base 12 into the surface of which the deglossing agent 6 is added in the second step, the solvent of the wig base material is applied, the net is removed after drying, thereby a minute concave and convex portion 12D is formed by fine mesh on the wig base surface.
The fine mesh net used in this step may be of any material so far as not soluble in the solvent applied to said wig base. For example, if the wig base is made of a urethane resin, nylon may be used as the fine mesh net. Said net is preferably knitted with thread diameter of 0.03 - 0.1 mm, and preferably has the size of about 30 - 100 meshes (threads/inch) in order to attain the reduced light reflection and a scalp -like structure.

In said second and third steps, the wig base 2 made in the first step is degloss processed, resulting in the wig base 12 having natural gloss. Thereby, the wig base 12 is combined degloss processed by the formation of the deglossing agent-added region 12A with the added inorganic particles and minute concave and convex portion 12D.

The steps below are common for wigs 1 and 10.
As the fourth step of the process, human or artificial hairs are planted by V-implanting or else as the hairs of a wig 2 or 12.

As the fifth step, an adhesive layer 4 for a wig is formed on the inner side of the wig 2 or 12 with hair implanted thereon. The adhesive layer 4 for a wig can be formed by applying the adhesive for a wig having both functions to fix the needle foot portions 3A of hair on the inner side of the deglossed wig base 2 or 12 to the wig base 2 or 12, and to bond to a head, and drying. As the method of applying the adhesive for a wig, the applying method using spray or a brush may be used.

The formation step of the adhesive layer for the wig 4 is explained by a specific example.
The adhesive layer 4 for a wig is formed on the backside (inner side) of the wig base 2 or 12 with hair implanted thereon. In this case, the wig base 2 or 12 is reversed, and fixed on a male mold imitative of the wig wearer's head shape, and, in this state, the adhesive layer 4 for a wig is formed on the inner side of the wig base. Said male mold of a head shape is made, for example, of thermosetting epoxy resin.
First, the adhesive monomer for a wig and organic solvent are mixed and stirred. As said adhesive monomer for a wig, a two liquids mixture type adhesive may be used. Further, whenever necessary, the organic solvent of the wig base 2 or 12 may be used. Said solution is settled at ordinary temperature for predetermined time for the reaction to proceed to be the adhesive solution for a wig. Here, settling for predetermined time is for the bridging reaction to proceed to some extent between molecules in said solution.
Next, the adhesive solution for a wig settled for pre-set time is applied to the inner side of the wig base 2 or 12 to the desired thickness, dried for predetermined time at heating temperature higher than ordinary temperature, and cooled to room temperature after drying, resulting in the formation of the adhesive layer 4 for a wig. In order to attain the adhesive layer 4 of the desired thickness, applying said adhesive solution for a wig and drying by heating may be repeated.
In this connection, the adhesiveness between the wig base 2 and the adhesive layer 4 and that between the wig base 2 and the needle foot portions 3A of hair implanted thereon are realized during gelation by drying for predetermined time at heating temperature higher than ordinary temperature. Though said adhesive layer formed by sole gelation of the adhesive solution for a wig has bonding function to the scalp, the adhesiveness between the wig base 2 and the adhesive layer 4 and that between the wig base 2 and the needle foot portions 3A of hair implanted thereon are not realized.

In said fifth step of the process, the adhesive layer 4 for the wig of the present invention is formed, and the wigs 1 and 10 can be manufactured. Further, on the adhesive layer 4 for the wig, a sheet 5 for peeling may be provided for protection before use.

### Example

As an example, a wig 10 having a deglossed wig base 12 was manufactured in accordance with the present invention.
As the first step of the process, to a gypsum mold of the shape of the wig wearer's head prepared in advance, the solution in which urethane elastomer is dissolved into DMF (dimethylformamide) and MEK (methylethylketone), and a fungicide was added was applied, and dried for about one hour at heating temperature of 60°C to manufacture a wig base 1 with the thickness of about 0.04 mm.

As the second step, the solution for deglossing was prepared in which urethane elastomer is dissolved into DMF and MEK, and a fungicide was added, and further powdery silica (average diameter 3.1-4.1 µm) as a deglossing agent 6, an ultraviolet absorber, and an antioxidant were added. The weight of silica was about 15% to the urethane elastomer weight. Said solution for deglossing was applied to the wig base 1, and dried for about 2 - 4 hours at heating temperature of 60°C .

Next as the third step, a net for commercially available nylon stockings is covered as the fine mesh net onto the surface of the wig base where the deglossing agent 6 was added in said second step, MEK and DMF as the organic solvents of the wig base were applied, and dried for 4 hours at 100°C. After drying, said net was removed, resulting in the formation of a minute concave and convex portion 12D on the wig base surface. The thread diameter of the used net was 0.05 mm, and the mesh number was about 50 meshes (threads/inch).
Thus, on the surface of the wig base made of urethane resin, the region 12A containing the deglossing agent 6 and the concave and convex portion 12D are formed, thereby the deglossed wig base 12 was manufactured. The thickness of the wig base increased by about 0.01 - 0.015 mm of the thickness of the region 12A containing the deglossing agent 6, and the thickness of the whole wig base 12 was about 0.5 - 0.6 mm.
The wearer's scalp color was see-through, owing to the fact that said deglossed wig base 12 was ultra thin, and transparency was maintained, and further the light reflection from the base was as low as that from the scalp, thereby the natural-looking appearance with reduced gloss was attained.

As the fourth step, an artificial hair made of nylon was planted by V-implanting to the deglossed wig base 12.

As the fifth step, the adhesive layer 4 was formed on the inner side of the wig base 12 with the hair implanted thereon. Concretely, the wig base 12 with the hair implanted thereon was reversed, and set on the male mold of the wig wearer's head shape.

As the adhesive for a wig to form the adhesive layer 4, the mixture was used made of a two liquids mixture type urethane resin adhesive monomer comprising a main agent and a hardening agent and DMF as the organic solvent of the deglossed wig base 12. Here, the main agent had polyol with urethane resin as a main component, and the hardening agent had polyisocyanate as a main component. The main and the hardening agents of said two liquids mixture type urethane resin adhesive and DMF as the organic solvent were mixed and stirred. Said solution was settled for about 1-2 hours at room temperature for the reaction to proceed. The viscosity of the solution after settling was preferably 2000 - 3000 cps. Said solution of adhesive for a wig was applied with a brush to the inner side of the deglossed wig base 12, dried at 80 °C for 10 - 15 hours, and cooled after drying to the room temperature. Thus, the adhesive layer 4 of about 0.05 - 0.2mm was formed.

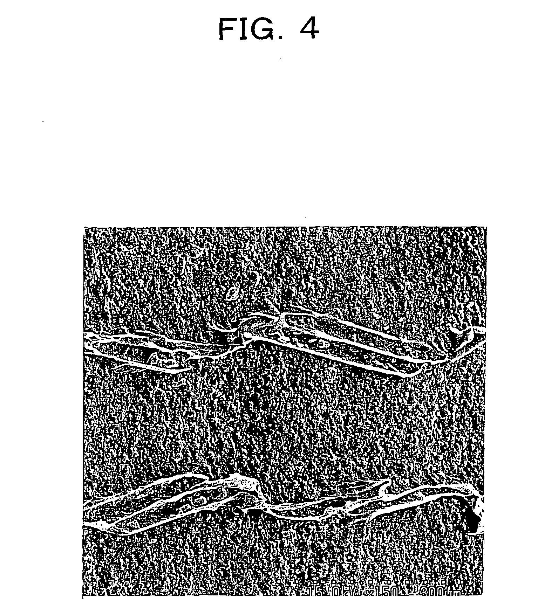

Fig. 4 is (A) an image of a scanning electron microscope (SEM) of minute concave and convex portions 12D formed on the wig 10 surface in Example. The acceleration voltage of an electron was 15 keV, and the magnification was 150. As is shown in the figure, the surface is seen as not flat and smooth but coarse by a deglossing agent 6. The minute concave portions are seen as formed by two linear portions in the horizontal direction in the figure transcribed with a net.

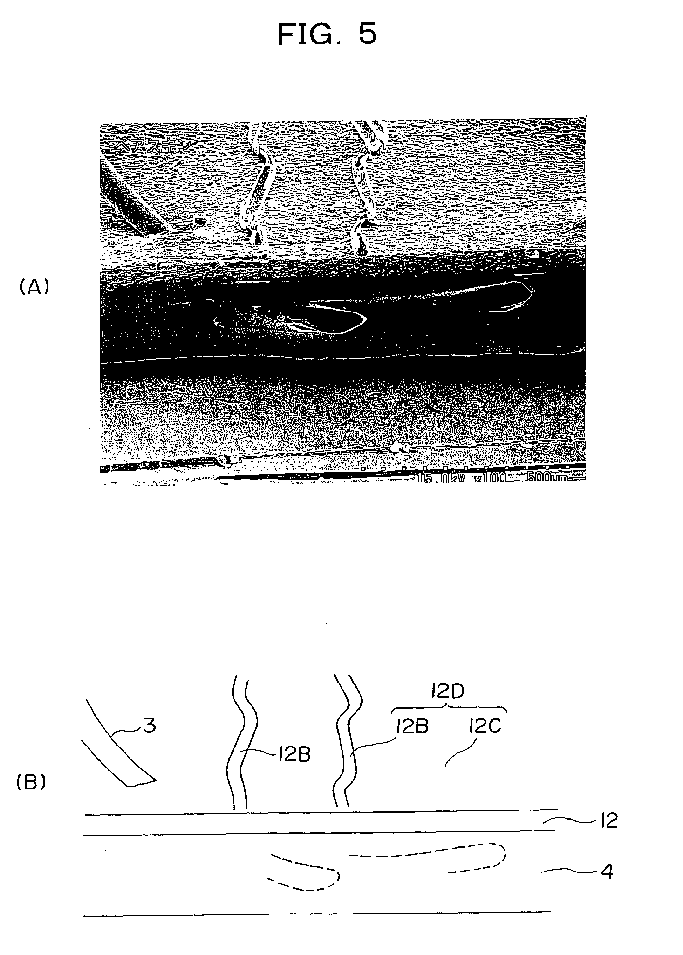

Fig. 5 is (A) an image of a scanning electron microscope, and (B) an illustration for its explanation of the surface and the cross-section of the wig 10 in Example. The acceleration voltage of an electron was 15 keV, and the magnification was 100. As is obvious from Fig. 5, it is seen that the wig 10 using a deglossed wig base 12 had a double layer structure comprising the wig base 12 of about 0.06 mm thickness and an adhesive layer 4 of about 0.19 mm thickness, and artificial hair 3 of about 0.06 mm diameter was implanted on the wig base 12. On the surface of the wig base 12, it is seen that the concave and the convex portions 12D were formed as the deglossed region.

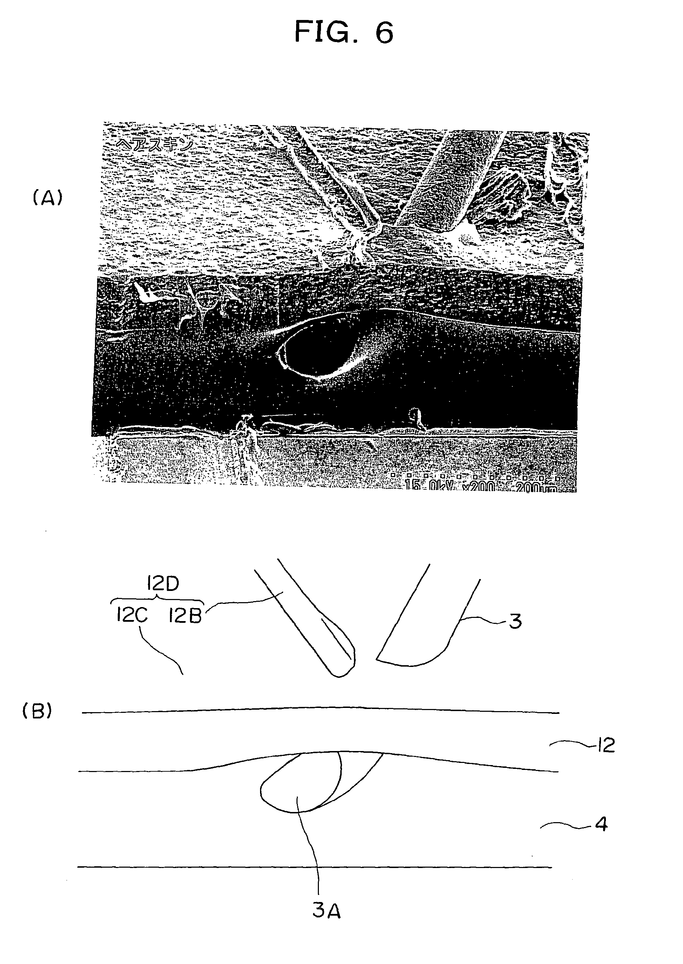

Fig. 6 is (A) an image of a scanning electron microscope, and (B) an illustration for its explanation of the surface and the cross-section of the wig 10 in Example 2. The acceleration voltage of an electron was 15 keV, and the magnification was 200. As is obvious from Fig. 6, it is seen that a needle foot portion of hair 3A was inserted from the upper portion of the deglossed wig base 12 to its lower portion, and fixed with the adhesive layer 4 to the deglossed wig base 12. Here, the illustrated example showed the case of the about 0.19 mm thick adhesive layer 4, but as the adhesive layer 4 for the case of bonding to scalp, about 0.04 - 0.06 mm was found appropriate.

The fixing strength of the wig base 12 and the needle foot portions of hair 3A to the adhesive layer 4 of the wig 10 was studied. The adhesion strength of the wig base 12 and the adhesive layer 4 was about 180 gf/mm², and the fixing strength of the needle foot portions of hair 3A and the adhesive layer 4 was about 10 gf/mm². The adhesion strength of the wig base 12 and the adhesive layer 4 was also studied by a method of manual peeling, and it turned out that the adhesive layer 4 was not peeled off at all from the wig base 12, showing to be adhered unpeelably.
Further, the fixing strength of the wig base 12 and the needle foot portions of hair 3A was studied by a method of manual pulling out of hair 3. The adhesion of the needle foot portions of hair 3A to the wig base 12 is weaker than that of the wig base 12 and the adhesive layer 4, but turned out as having sufficient fixing strength for hair brushing and the like.

The tackiness of the adhesive layer 4 and the re-peelability from scalp were also excellent. By wiping the adhesive layer 4 with water, it could be bonded again to the scalp, and moreover, such bonding and detaching could be conducted continuously over several tens of repetitions, resulting in confirmation of re-peelability of the adhesive layer 4. Therefore, since said wig can be worn and taken off either everyday or as necessary, not worn continuously for several days, it is hygienic, as well as practically quite favorable.

A test subject was let to wear said wig 10, and his outlook appearance was observed, then no light reflection from the adhesive layer 4 was observed. Also, when the head of a test subject wearing the wig 10 was observed by another test subject, the existence of the adhesive layer 4 was not recognized, the scalp color of the wig wearer is see-through, the same gloss and wrinkle pattern as scalp are visible, hence the wig 10 is not recognized as being worn, and the appearance turned out good.

The implementation and embodiment of the present invention have been explained above, but the present invention is by no way limited to the above-mentioned embodiment, but can be properly modified within the range of the present invention. For example, urethane gel was explained as a single adhesive layer 4, but so far as is given the fixing force of the wig base 2 or 12 and the needle foot portions of hair 3A implanted to said wig base, and re-peelability from a scalp portion, the adhesive for a wig for its manufacture can be properly selected. Also, a deglossing agent is not limited to silica, but may be other deglossing agents. Further, the specific numeric values explained in the above-mentioned embodiments may be properly changed as necessary.

## Claims

1. An adhesive for a wig, having an adhesive layer bondable unpeelably to an inner side of a wig base, and bondable by pressure re-peelably to scalp.

2. An adhesive for a wig, having an adhesive layer bonded to an inner side of a wig base, **characterized in that**:
a one side of said adhesive layer is bonded by chemical reaction to the inner side of said wig base during gelation reaction of the adhesive solution applied to the inner side of the wig base, and has the hair fixing function to fix the needle foot portion of hair planted penetrating the inner side of the wig base, while
the other side of said adhesive layer is bonded by pressure to scalp, and has the re-peelable function from scalp.

3. The adhesive for a wig as set forth in claim 2, **characterized**
**in that** said re-peelable function from scalp is realized after gelation reaction of said adhesive layer is completed.

4. The pressure sensitive adhesive for a wig as set forth in any one of claims 1 - 3, **characterized in that** said adhesive layer comprises urethane gel.

5. The adhesive for a wig as set forth in claim 4, **characterized**
**in that** said urethane gel comprises a pressure sensitive urethane resin adhesive of a two liquids mixture type made of a main agent and a hardening agent, wherein said main agent is polyol with a urethane resin as the main component, and said hardening agent has polyisocyanate as the main component.

6. A wig, **characterized in that** it comprises a wig base, hair implanted to said wig base, and an adhesive layer provided to the inner side of the wig base, wherein:
said adhesive layer has one side being bonded by chemical reaction to the inner side of said wig base during gelation reaction of the adhesive solution applied to the inner side of the wig base,
and the other side being bonded re-peelably by pressure to scalp.

7. The wig as set forth in claim 6, **characterized in that** one side of said adhesive layer is bonded by chemical reaction to the inner side of the wig base during gelation reaction of the adhesive solution applied to the inner side of said wig base, and has the hair fixing function to fix needle foot portions of hair planted penetrating the inner side of said wig base, while the other side of said adhesive layer is bonded by pressure to scalp, and it has the re-peelable function from scalp.

8. The wig as set forth in claim 6, **characterized in that** the surface of said wig base is degloss processed.

9. The wig as set forth in claim 8, **characterized in that** said degloss processing is conducted by mixing a deglossing agent to said wig base, and further forming minute concave and convex portions on said wig base surface.

10. The wig as set forth in claim 9, **characterized in that** said deglossing agent is inorganic particles.

11. The wig as set forth in claim 9, **characterized in that** said minute concave and convex portions are formed by transcription from a fine mesh.

12. The wig as set forth in any one of claims 6 - 9,
**characterized in that** said wig base is made of artificial skin of urethane resin.

13. The wig as set forth in claim 6, **characterized in that** said adhesive layer of the wig is of urethane gel.

14. The wig as set forth in claim 13, **characterized in that** said urethane gel comprises a urethane resin pressure sensitive adhesive of a two liquids mixture type made of a main agent and a hardening agent, wherein:
said main agent is polyol with a urethane resin as the main component, and said hardening agent has polyisocyanate as the main component.

15. A method of manufacturing an adhesive layer for a wig, which is a method of manufacturing an adhesive layer provided on the inner side of the wig base, **characterized in that**,
a solution containing a main agent, a hardening agent, and organic solvent is mixed and stirred, left at ordinary temperature for a predetermined time for reaction to proceed,
said solution is applied to the inner side of the wig base, heated at the pre-set temperature higher than ordinary temperature, bonded to said inner side of the wig base, and
cooled to ordinary temperature after heating for the predetermined time, thereby hair fixing function is given to the wig base side of said adhesive layer to fix needle foot portions of hair implanted penetrating the inner side of said wig base, as well as re-peeling function from scalp is given to the side of said adhesive layer to be bonded to scalp.

16. The method of manufacturing an adhesive layer for a wig as set forth in claim 15, **characterized in that** said adhesive layer is made of urethane gel.

17. The method of manufacturing an adhesive layer for a wig as set forth in claim 15 or 16, **characterized in that** said adhesive layer comprises a urethane resin of the two liquids mixture type made of a main agent and a hardening agent, wherein said main agent is polyol with a urethane resin as the main component, and said hardening agent has polyisocyanate as the main component.

18. A method of manufacturing a wig including a process of forming a wig base of soft plastics, a process of implanting hair to said wig base, and a process of forming an adhesive layer on the inner side of said wig base, wherein:
said adhesive layer is **characterized in that**,
a solution containing a main agent, a hardening agent, and organic solvent is mixed and stirred, left at ordinary temperature for a predetermined time for reaction to proceed,
said solution is applied to the inner side of the wig base, heated at the pre-set temperature higher than ordinary temperature, bonded to the inner side of said wig base, and cooled to ordinary temperature after heating for a predetermined time to form an adhesive layer,
thereby hair fixing function is given to said wig base side of said adhesive layer to fix needle foot portions of hair planted penetrating the inner side of said wig base, as well as re-peeling function from scalp is given to the side of said adhesive layer to be bonded to scalp.

19. The method of manufacturing a wig as set forth in claim 18,
**characterized in that**,
said hair is planted in V- or U-shape by penetrating from the surface to the inner side of the wig base to form needle foot portions of hair, and pulling out again to said surface,
said solution to form said adhesive layer is applied to the inner side of the wig base, heated at the pre-set temperature higher than ordinary temperature, and bonded to the inner side of said wig base,
thereby said needle foot portions of hair is fixed to the inner side of the wig base.

20. The method of manufacturing a wig as set forth in claim 18,
**characterized in that** making of said wig base includes a degloss processing to said wig base, and said degloss processing comprises a process to add a deglossing agent to said wig base, and a process to form minute concave and convex portions on the surface.

21. The method of manufacturing a wig as set forth in claim 20,
**characterized in that** the process to add a deglossing agent to said wig base is conducted during a wig base making process by applying and drying the solution with inorganic particles added into the solution to become said wig base.

22. The method of manufacturing a wig as set forth in claim 20,
**characterized in that** the process to form concave and convex portions on said wig base is such that said wig base is covered with a fine mesh net after the process to add said deglossing agent to said wig base, and concave and convex portions are formed by transcription of said fine mesh.

23. The method of manufacturing a wig as set forth in claim 18,
**characterized in that** the soft plastics which makes up said wig base is a urethane resin, and said adhesive layer is made of urethane gel.

24. The method of manufacturing a wig as set forth in claim 18,
**characterized in that** said adhesive layer is formed with a urethane resin of a two liquids mixture type made of a main agent and a hardening agent, wherein said main agent is polyol with a urethane resin as the main component, and said hardening agent is polyisocyanate as the main component.
